# EUROPEAN PATENT APPLICATION

(11) **EP 1 345 301 A2**
(43) Date of publication of application: **17.09.2003**
(21) Application number: 03466006.8
(22) Date of filing: 12.03.2003
(51) Int. Cl.: H02B 1/30

(54) **Cabinet with built in internal rotating frame**

(30) Priority: 13.03.2002 CZ 20020919
(71) Applicant: Triton Pardubice spol. s r.o., 530 02 Pardubice (CZ)
(72) Inventor: Riley, Stuart William, 530 02 Pardubice (CZ)

(57) **Abstract**

Cabinet with built in internal rotating frame the constructional principle of which consists in the cabinet, which is provided with a lower supporting base plate on which the internal rotating frame that rotates all round the vertical axis is embedded on traveling wheels. The internal rotating frame is in its vertical position fixed by guide pins coming into the circular cut out of the upper guide plate of the cabinet skeleton located above the upper frame of the built in internal rotating frame.

## Description

### Sphere of Engineering

This invention concerns constructional design of switchboard cabinet and into it built in rotating frame for modular architecture of weak current equipment in branch of transmission and recording of signals for safety appliances, computerized control of technological processes, computer and television networks, informatics etc.

### Up to now State of the Art

At present realized systems of the modular frame distributions of the weak current equipment, built on the principle of brick-box of several individual box units, enable access to installation, assembly of individual components, blocks, sections, their checking, repair or replacement through access front doors of the switchboard cabinets only, which are usually also dismountable. Access from side is in case of assembly of more switchboard cabinets side by side not possible, and thus existing solutions consist in installing of tilting frames into the cabinets, or the frames are designed so that the individual blocks or sections can be pushed forward also with installed components.

Common disadvantage of these solutions is that by tilting the frame, or by pushing forward the blocks or sections, the center of gravity is expressively changed and the switchboard cabinet becomes unstable which produce necessity of an anchoring to floor or wall, or necessity to use additional anti-sway bars before tilting the frame or pushing forward the modules. Further disadvantage of the design with the tilt-able frames is considerable limitation of the components installation depth.

### Subject matter of the Invention

Aforesaid disadvantages are in considerable extent eliminated by the design according to this invention, the principle of which is that the built in rotating frame, into which the individual components are assembled and installed, makes basically a self-contained unit, which is inserted into the cabinet as a whole pivoted round its vertical axis, which is identical with the cabinet axis, while the rotating is possible in both directions.

The constructional design of the cabinet enabling rotation of the built in frame consists in that fact that is composed of the cabinet skeleton lower supporting base plate, in which an inner opening having advantage of circular shape is made, through which cables to the assembly places are from the cabinet bottom led.

The lower supporting base plate is located in plane of the upside of the cabinet pedestal so that the space under this supporting base plate offers enough places for cabling.

The cabinet skeleton is further made of vertical sectional webs, which joint the lower supporting base plate with the upper guide plate and simultaneously secure sufficient stiffness and compactness of the cabinet skeleton.

Location of the upper guide plate with the circular cut out is determined by the rotating frame height, because it is always located above the rotating frame, with advantage closely above its upper horizontal frame. The center of the circular cut out in the upper guide plate is situated in the vertical axis of the cabinet and its diameter is equal to diagonal axis-to-axis distance of opposite vertical guide pins extended by diameter of the guide pin.

The rotating frame, the lower frame of which is on its underneath side provided with the traveling wheels, is embedded by these traveling wheels on the upside of the lower supporting base plate and in vertical position fixed by the guide pins. The guide pins are found on the upside of the upper frame of the rotating frame, enter into the circular cut out of the cabinet upper guide plate and touch the inner surface of the circular cut out and furthermore also stabilize and direct the rotating motion of the rotating frame inside the cabinet.

If the inner opening of the lower supporting base plate has the circular shape, the center of which is situated in the cabinet vertical axis, it is advantageous to provide the underneath side of the lower frame of the rotating frame with guide pins directed vertically down. The guide pins length should be at least by thickness of the cabinet lower supporting base plate longer than the height of the traveling wheels, and the guide pins are located so that they touch the inner surface of the circular opening in the cabinet lower supporting base plate.

Owing to this constructional design especially the stability of high switchboard cabinets is improved, and manipulation with the built in internal rotating frame during installation, assembly and repair of individual components, blocks or sections is made easy.

The cabinet skeleton is during completion provided with dismountable doors, sides cover walls and with top cover above the upper guide plate.

### Figures Description

Figure 1 shows schematic sketch of the internal rotating frame composed of the lower and upper horizontal frames made of frame cross beams 1 and cross pieces 2, which are jointed together by vertical sectional webs 3 "H" in the corners.

The lower frame of the internal rotating frame is provided on the underneath side with the traveling wheels 8 and the guide pins 7' directed vertically down. The upper frame of the internal rotating frame is next also provided on the upside with the vertical guide pins 7.

Figure 2 shows schematic sketch of octagonal skeleton of the cabinet composed of the lower supporting base plate 4 with inner circular opening located in the level of upside of the pedestal 5, which is firmly jointed by means of vertical sectional webs 6 with the upper guide plate 10 and the cabinet top cover 9.

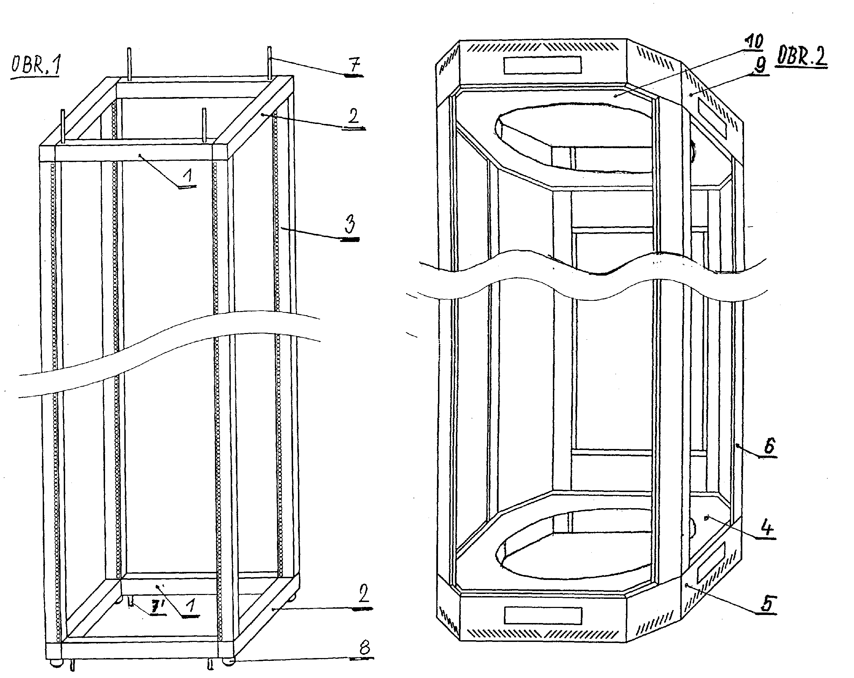

In the upper guide plate 10 is made inner circular cut out into which the vertical guide pins 7, after inserting the built in rotating frame, are inserted.

## Claims

1. The cabinet with built in rotating frame consisting of the lower and upper frames, which are made of the horizontal frame cross beams (1) and cross pieces (2) and jointed at least by four vertical sectional webs (3) "H" in their corners, provided with system of attaching and fixing openings, being distinguished by consisting of the lower supporting base plate (4) of the cabinet skeleton, corresponding by its external contour to the contour of the cabinet in which the inner opening, which is symmetrical to the vertical axis of the cabinet is made, and which is located in the level of the upside of the cabinet pedestal (5), with which forms with the aid of angle cleats, also with the vertical sectional webs (6) of the cabinet skeleton, firm demountable connection. Further consisting of the upper guide plate (10) of the cabinet with made circular cut out the center of which is located in the cabinet vertical axis and the diameter of which is equal to diagonal axis to axis distance of the opposite guide pins (7) extended by the diameter of the guide pin (7), which is located above the upper frame of the built in rotating frame and forms with the vertical sectional webs (6) of the cabinet skeleton demountable connection. The built in rotating frame, the lower frame of which is provided on the underneath side with traveling wheels (8) and the upper frame of which is provided on the upside with the guide pins (7), the length of which reaches at least to the upside of the upper guide plate (10) of the cabinet skeleton is embedded on the lower supporting base plate (4) and is pivoted all round the built in rotating frame axis identical with the axis of the cabinet, and its embedding is fixed by the vertical guide pins (7), which enter into the circular cut out of the upper guide plate (10) and touch by their outsides the inner surface of the circular cut out of the upper guide plate (10).

2. The cabinet with built in rotating frame according to the Claim 1 is distinguished by the circular shape of the inner opening in the lower supporting base plate (4).

3. The cabinet with built in rotating frame according to the Claim 1 and 2 is distinguished by having the underneath side of the lower frame of the rotating frame provided with guide pins (7') directed vertically down, the length of which is at least by the thickness of the cabinet lower supporting base plate (4) longer than the height of the traveling wheels (8), and they are located so that they touch the inner surface of the circular opening in the cabinet lower supporting base plate (4).
